# EUROPÄISCHE PATENTANMELDUNG

(11) **EP 0 632 569 A1**
(43) Veröffentlichungstag der Anmeldung: **04.01.1995**
(21) Anmeldenummer: 94110141.2
(22) Anmeldetag: 29.06.1994
(51) Int. Cl.: H02M 3/07

(54) **Schaltungsanordnung zur Wandlung einer Gleichspannung in eine Teilspannung**

(30) Priorität: 01.07.1993 AT 1292/93
(71) Anmelder: UHER Aktiengesellschaft für Zähler und elektronische Geräte, A-1194 Wien (AT)
(72) Erfinder: Kalny, Friedrich, Dipl.-Ing., A-1130 Wien (AT)
(74) Vertreter: Fuchs, Franz-Josef, Dr.-Ing.

(57) **Zusammenfassung**

Schaltungsanordnung zur Wandlung einer Gleichspannung in eine Teilspannung, welche an einem Pufferkondensator (8) abgreifbar ist, wobei ein erster Pol (11) der Spannungsquelle (1) über eine Kondensatoren (41 bis 45) und Dioden (51 bis 54, 61 bis 64, 71 bis 74) enthaltende Schaltung an einen ersten Pol (81) des Pufferkondensators (8) gelegt ist und der zweite Pol (12) der Spannungsquelle (1) an den zweiten Pol (82) des Pufferkondensators (8) gelegt ist. Dabei ist der erste Pol (11) der Spannungsquelle (1) an den Eingang eines ersten Schalters (31) gelegt, an dessen Ausgang die Serienschaltung mindestens eines Kondensators (41 bis 44) und jeweils einer ersten Diode (51 bis 54) gelegt ist, wobei die letzte Diode (54) der Serienschaltung an den ersten Pol (81) des Pufferkondensators (8) gelegt ist, daß der eine Pol des mindestens eines Kondensators (41 bis 44) über jeweils eine zweite Diode (61 bis 64) an den Eingang eines zweiten Schalters (32) gelegt ist, dessen Ausgang gleichfalls mit dem ersten Pol (81) des Pufferkondensators (8) verbunden ist und ist weiters der zweite Pol (12) der Spannungsquelle (1) über jeweils eine dritte Diode (71 bis 74) an den anderen Pol des mindestens einen Kondensators (41 bis 45) gelegt.

## Beschreibung

Die gegenständliche Erfindung betrifft eine Schaltungsanordnung zur Wandlung einer Gleichspannung in eine Teilspannung, welche an einem Pufferkondensator abgreifbar ist, wobei ein erster Pol der Spannungsquelle über eine Kondensatoren und Dioden enthaltende Schaltung an einen ersten Pol des Pufferkondensators und der zweite Pol der Spannungsquelle an den zweiten Pol des Pufferkondensators gelegt ist.

Der Erfindung liegt die Aufgabe zugrunde, einen Spannungswandler für Gleichspannungen zu schaffen, welcher einen einfachen Aufbau aufweist, welcher keine induktiven Bauelemente erfordert und durch welchen keine elektromagnetischen Störungen verursacht werden.

Dies wird erfindungsgemäß dadurch erzielt, daß der erste Pol der Spannungsquelle an den Eingang eines ersten Schalters gelegt ist, an dessen Ausgang die Serienschaltung mindestens eines Kondensators und jeweils einer ersten Diode gelegt ist, wobei die letzte Diode der Serienschaltung an den ersten Pol des Pufferkondensators gelegt ist, daß der eine Pol des mindestens einen Kondensators über jeweils eine zweite Diode an den Eingang eines zweiten Schalters gelegt ist, dessen Ausgang gleichfalls mit dem ersten Pol des Pufferkondensators verbunden ist und daß weiters der zweite Pol der Spannungsquelle über jeweils eine dritte Diode an den anderen Pol des mindestens einen Kondensators gelegt ist.

Nach weiteren bevorzugten Merkmalen sind die beiden Schalter durch Transistoren gebildet, an welche eine Steuerschaltung angelegt ist, wobei zwischen dem ersten Pol der Spannungsquelle und dem ersten Schalter eine Stabilisierungsschaltung vorgesehen sein kann, welche vorzugsweise einen Feldeffekttransistor und mindestens eine Zenerdiode enthält. Die Steuerung der Schalter kann durch einen Taktgeber erfolgen.

Eine erfindungsgemäße Schaltungsanordnung ist nachstehend anhand eines in der Zeichnung dargestellten Ausführungsbeispiels näher erläutert. Es zeigen:
- Fig. 1: eine erste Ausführungsform der erfindungsgemäßen Schaltungsanordnung,
- Fig. 2: eine Ausführungsvariante der Schaltungsanordnung gemäß Fig. 1 und
- Fig. 3: die erste Ausführungsform mit veränderter Polung der Spannungsquelle.

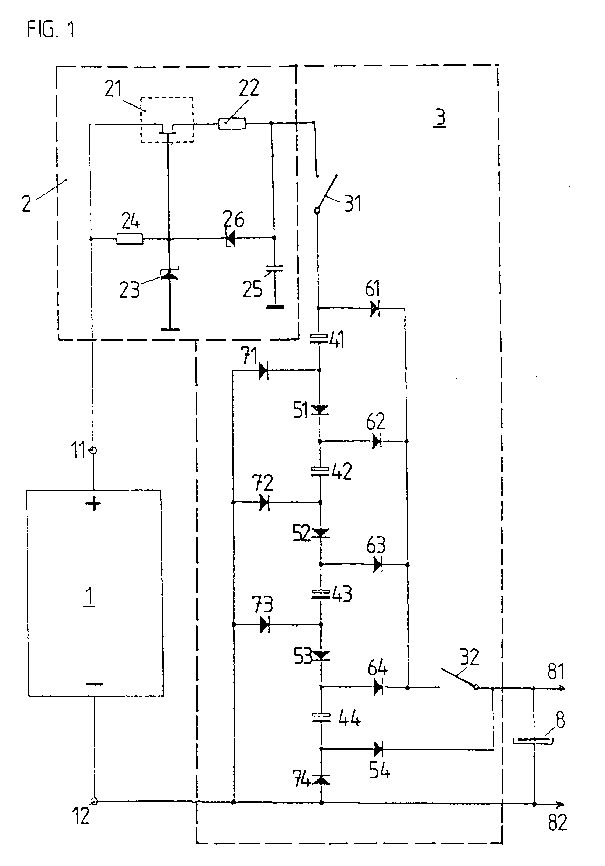

Wie aus Fig. 1 ersichtlich ist, wird eine anmeldungsgemäße Schaltungsanordnung 3 zur Wandlung einer Gleichspannung in eine Teilspannung von einer Gleichstromquelle 1 über eine Stabilisierungsschaltung 2 gespeist, wobei die Teilspannung an einem Pufferkondensator 8 abgenommen wird. Diese Schaltungsanordnung dient zur Speisung eines nicht dargestellten Verbrauchers.

Die Gleichstromquelle 1 ist durch eine Gleichrichterschaltung gebildet. Der positive erste Pol 11 der Gleichspannungsquelle 1 ist an die Stabilisierungsschaltung 2 gelegt. Demgegenüber ist der an Bezugspotential liegende zweite Pol 12 der Gleichstromquelle direkt an den zweiten Pol 82 des Pufferkondensators 8 gelegt. Die Gleichspannungsquelle 1 weist eine Spannung von z.B. 200 V bis 600 V auf. Vom Pufferkondensator 8 wird an den Verbraucher eine Spannung von z.B. 40 V abgegeben.

Die Stabilisierungsschaltung 2 enthält die Serienschaltung eines Feldeffekttransistors 21 und eines Widerstandes 22, wobei an die Basis des Feldeffekttransistors 21 eine Schaltung gelegt ist, welche mindestens eine Zenerdiode 23 und einen Kondensator 25 enthält. Zudem sind an den Feldeffekttransistor 21 ein weiterer Widerstand 24 und eine weitere Zenerdiode 26, welche der Strombegrenzung dienen, gelegt.

Da derartige Schaltungen bekannt sind, ist diese Stabilisierungsschaltung nicht weitergehend erläutert. Maßgeblich ist, daß an den Eingang der Schaltungsanordnung 3 eine stabilisierte Spannung anliegt.

Die Schaltungsanordnung 3 enthält einen ersten Schalter 31, dessen Ausgang an die Serienschaltung von Kondensatoren 41 bis 44 und von Aufladedioden 51 bis 54 gelegt ist, wobei die Kathode der letzten Diode 54 an den ersten Pol 81 des Pufferkondensators 8 gelegt ist. Weiters sind die Anoden der Kondensatoren 41 bis 44 über Entladedioden 61 bis 64 an den Eingang eines zweiten Schalters 32 gelegt, dessen Ausgang gleichfalls mit dem ersten Pol 81 des Pufferkondensators 8 verbunden ist. Schließlich ist der zweite Pol 12 der Gleichspannungsquelle 1 über weitere Entladedioden 71 bis 74 an die Kathoden der Kondensatoren 41 bis 44 gelegt.

Die Wirkungsweise dieser Schaltung ist wie folgt:
Die von der Gleichspannungsquelle 1 abgegebene Spannung wird durch die Schaltung 2 stabilisiert. Sobald der erste Schalter 31 geschlossen wird, werden die Kondensatoren 41 bis 44 ebenso wie der Pufferkondensator 8, der über die Diode 54 mit diesen gleichfalls in Serie liegt, aufgeladen. Da demgegenüber der zweite Schalter 32 offen ist, sind die Entladedioden 61 bis 64 wirkungslos. Hierdurch werden die Kondensatoren 41 bis 44 und der Pufferkondensator 8 auf eine Spannung aufgeladen, welche einem Fünftel der von der Spannungsquelle 1 abgegebenen Spannung gleich ist.

In weiterer Folge wird der erste Schalter 31 geöffnet und wird nach einer kurzen Zeitspanne, in welcher Restströme abklingen, der zweite Schalter 32 geschlossen. Da hierdurch die Anoden der Kondensatoren 41 bis 44 mit deren Kathoden jeweils über die Entladededioden 61 bis 64, den Schalter 32, den Pufferkondensator 8 und die dritten Dioden 71 bis 74 verbunden sind, erfolgt deren Entladung und eine Umladung auf den Pufferkondensator 8 bzw. wird hierdurch ein angeschlossenes Gerät mit der an den Pufferkondensator 8 anliegenden Spannung gespeist.

Sobald hierauf der zweite Schalter 32 geöffnet und mit kurzem zeitlichen Abstand der erste Schalter 31 wieder geschlossen wird, erfolgt wiederum eine Aufladung der Kondensatoren 41 bis 44.

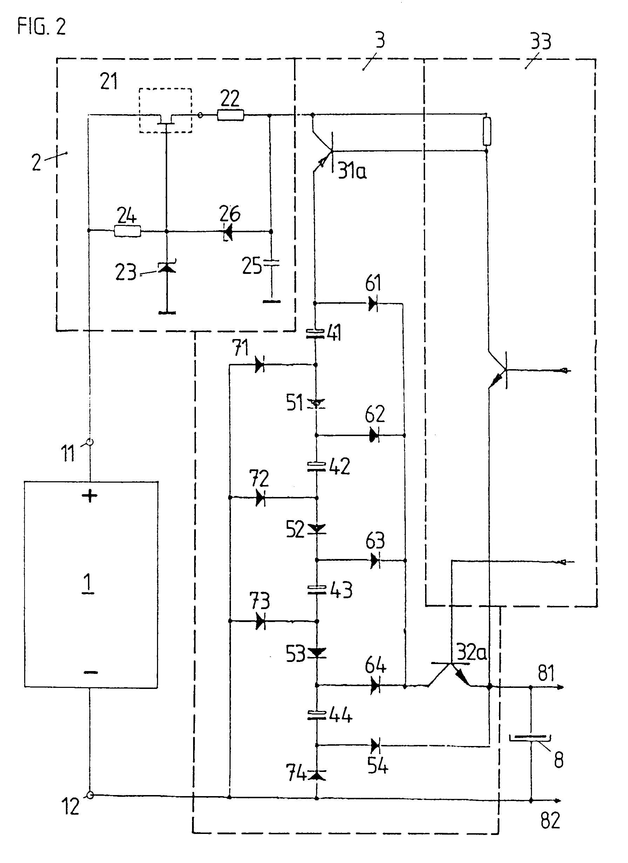

Wie dies aus Fig. 2 ersichtlich ist, kann die Funktion der beiden Schalter durch Transistoren 31a und 31b erfüllt werden, wobei zu deren Steuerung ein Taktgeber 33 dient.

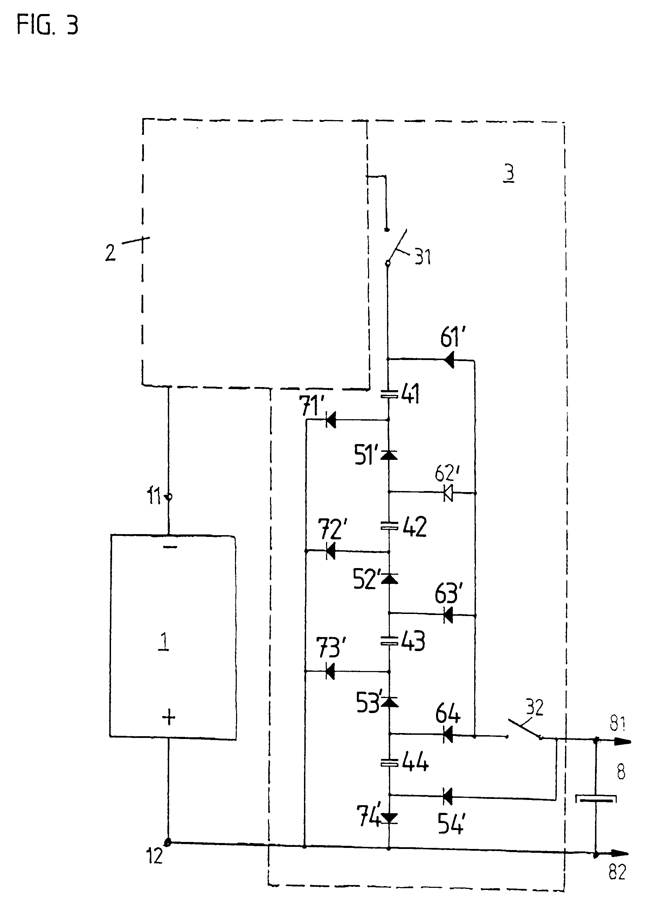

Wie weiters aus Fig. 3 ersichtlich ist, erfolgt bei einer Änderung der Polung der Gleichspannungsquelle 1 auch eine Änderung der Durchlaßrichtung der Ladedioden 51' bis 54' sowie der Entladedioden 61' bis 64' und 71' bis 74'.
Bei Verwendung von Kondensatoren mit Kapazitäten im Bereich von 1 µF bis 1000 µF kann die Umladung mit Frequenzen im Bereich von 10 Hz bis 10 kHz erfolgen. Bei einer Anzahl von n Kondensatoren erfolgt eine Teilung der Spannung auf den n+1-Teil. In einer bevorzugten Ausführungsform weisen die Kondensatoren 41 bis 44 eine Kapazität von 100 µF auf und hat der Pufferkondensator eine Kapazität von 1000 bis 4700 µF. Die Schalter 31 bzw. 32 werden etwa 5 ms bis 8 ms geschlossen, wobei der jeweils eine Schalter 0,1 ms bis 0,3 ms, nachdem der andere Schalter geöffnet wurde, geschlossen wird.

Da keine induktiven Bauelemente verwendet werden, keine hohen Frequenzen auftreten und keine großen Ströme fließen, werden keine elektromagnetischen Störungen verursacht.

## Patentansprüche

1. Schaltungsanordnung zur Wandlung einer Gleichspannung in eine Teilspannung, welche an einem Pufferkondensator abgreifbar ist, wobei ein erster Pol der Spannungsquelle über eine Kondensatoren und Dioden enthaltende Schaltung an einen ersten Pol des Pufferkondensators gelegt ist und der zweite Pol der Spannungsquelle an den zweiten Pol des Pufferkondensators gelegt ist, dadurch gekennzeichnet, daß der erste Pol (11) der Spannungsquelle (1) an den Eingang eines ersten Schalters (31) gelegt ist, an dessen Ausgang die Serienschaltung mindestens eines Kondensators (41 bis 44) und jeweils einer ersten Diode (51 bis 54) gelegt ist, wobei die letzte Diode (54) der Serienschaltung an den ersten Pol (81) des Pufferkondensators (8) gelegt ist, daß der eine Pol des mindestens eines Kondensators (41 bis 44) über jeweils eine zweite Diode (61 bis 64) an den Eingang eines zweiten Schalters (32) gelegt ist, dessen Ausgang gleichfalls mit dem ersten Pol (81) des Pufferkondensators (8) verbunden ist und daß weiters der zweite Pol (12) der Spannungsquelle (1) über jeweils eine dritte Diode (71 bis 74) an den anderen Pol des mindestens einen Kondensators (41 bis 45) gelegt ist.

2. Schaltungsanordnung nach Patentanspruch 1, dadurch gekennzeichnet, daß die beiden Schalter durch Transistoren (31a, 32a) gebildet sind, an welche eine Steuerschaltung (3) angelegt ist.

3. Schaltungsanordnung nach einem der Patentansprüche 1 und 2, dadurch gekennzeichnet, daß zwischen dem ersten Pol (11) der Spannungsquelle (1) und dem ersten Schalter (31) eine Stabilisierungsschaltung (2) angeordnet ist.

4. Schaltungsanordnung nach Patentanspruch 3, dadurch gekennzeichnet, daß die Stabilisierungsschaltung (2) einen Feldeffekttransistor (21) und mindestens eine Zenerdiode (23) enthält.

5. Schaltungsanordnung nach einem der Patentansprüche 1 bis 4, dadurch gekennzeichnet, daß die Schalter (31, 32) durch einen Taktgenerator gesteuert werden, welcher diese Schalter (31, 32) wechselweise betätigt, wobei das Öffnen des jeweils einen Schalters und das Schließen des jeweils anderen Schalters in zeitlichem Abstand voneinander erfolgt.
